# EUROPÄISCHE PATENTSCHRIFT

(11) **EP 3 917 759 B1**
(45) Veröffentlichungstag und Bekanntmachung des Hinweises auf die Patenterteilung: **13.07.2022**
(21) Anmeldenummer: 20713883.5
(22) Anmeldetag: 24.03.2020
(51) Int. Cl.: B29C 65/14, B29C 65/10, B29C 65/78, B29C 65/24, B64D 13/00, B29L 31/30

(54) **VERFAHREN ZUM HERSTELLEN EINES LUFTFÜHRUNGS-BAUTEILS**
METHOD FOR PRODUCING AN AIR GUIDING COMPONENT
PROCÉDÉ DE FABRICATION D'UNE PIÈCE DE GUIDAGE D'AIR

(30) Priorität: 26.03.2019 DE 102019002129
(43) Veröffentlichungstag der Anmeldung: 08.12.2021
(73) Patentinhaber: Diehl Aviation Laupheim GmbH, 88471 Laupheim (DE)
(72) Erfinder: ADE, Fabian, 88255 Baienfurt (DE); SCHILLING, Christian, 73230 Kirchheim (DE); STEINMAYER, Peter, 88477 Schwendi (DE); BEIN, Robert, 89231 Neu-Ulm (DE); PFETSCHER, André, 89079 Ulm (DE)
(74) Vertreter: Diehl Patentabteilung
(86) Internationale Anmeldenummer: PCT/EP2020/058100
(87) Internationale Veröffentlichungsnummer: WO 2020/193518

(56) Entgegenhaltungen:
- EP-A1- 0 922 559
- WO-A1-2014/057135
- WO-A1-2016/004522

## Beschreibung

Die Erfindung betrifft ein Verfahren zum Herstellen eines Luftführungs-Bauteils für eine Klimatisierungsvorrichtung eines Flugzeuges.

Entsprechende Klimatisierungsvorrichtungen bzw. Klimalösungen dienen insbesondere der Belüftung, Heizung und Kühlung eines Innenraumes eines Flugzeuges, insbesondere einer Passagierkabine in einem Passagierflugzeug. Luft wird hierbei durch die Luftführungs-Bauteile geführt. Beispiele für solche Bauteile sind zum Beispiel Rohre, Verzweigungen, oder Ein- und Auslässe. Die Geometrie derartiger Bauteile kann äußerst komplex sein.

Aus der Praxis ist es bekannt, derartige Bauteile aus faserverstärkten Kunststoffen, als Sandwichaufbau herzustellen. Geometrisch komplexe Bauteile (wie zum Beispiel Luftauslässe) werden aus mehreren Einzelbauteilen hergestellt, die aufwendig miteinander gefügt werden müssen.

Die WO 2016/004522 A1 offenbart ein Verfahren zum Herstellen eines Luftführungs-Bauteils für eine Klimatisierungsvorrichtung eines Flugzeuges, bei dem mehrere Teilschalen mittels eines Infrarotlaserschweißverfahrens miteinander zu einem Bauteil verbunden werden.

Ferner sind aus der WO 2014/057135 A1 sowie der EP 0 922 559 A1 Verfahren zum Verbinden von Bauteilen bekannt, bei denen Bauteile aus Kunststoffschaum unter Verwendung eines Heizelements kontaktlos erhitzt und verbunden werden.

Aufgabe der Erfindung ist es, ein verbessertes Herstellungsverfahren für ein Luftführungs-Bauteil vorzuschlagen.

Die Aufgabe wird gelöst durch ein Verfahren gemäß Patentanspruch 1 zum Herstellen eines Luftführungs-Bauteils für eine Klimatisierungsvorrichtung eines Flugzeuges. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Bei dem Verfahren werden mindestens zwei Teilschalen des Bauteils bereitgestellt. Mindestens eine der Teilschalen weist eine Fügefläche auf. An dieser Fügefläche ist die Teilschale mit einer anderen der Teilschalen zu verbinden. Die Teilschalen enthalten zumindest an den Fügeflächen Partikelschaum. Mindestens ein Abschnitt einer der Fügeflächen wird kontaktlos erhitzt. Die Teilschalen werden an den erhitzten Fügeflächen aneinander gelegt und dadurch miteinander verbunden.

Insbesondere werden die Teilschalen dadurch verbunden, dass eine Fügefläche eines ersten Bauteils an eine Fügefläche eines zweiten Bauteils angelegt wird und die Fügeflächen miteinander verbunden werden. Dabei wird mindestens eine der Fügeflächen erhitzt.

Die Erfindung beruht auf der Idee, derartige Bauteile aus bzw. auf Basis von Partikelschaum zu entwickeln, sodass die Bauteile den Anforderungen der Luftfahrt entsprechen.

Die Erfindung beruht auf der Beobachtung, dass die besonderen Herausforderungen dabei komplexe 3-D-Geometrien sind, mit engen Maßtoleranzen (aufgrund begrenzten Bauraumes) und hohen Anforderungen an geringes Gewicht sowie eine möglichst weitreichende Integration von weiteren Anbauteilen in oder an den Partikelschaum.

Die Erfindung beruht auf der Überlegung, dass es hierbei eine Möglichkeit ist, mehrere, Teilschalen, insbesondere zwei Halbschalen, zum eigentlichen Bauteil aneinander zu fügen. Bezüglich des Herstellungsverfahrens wird dabei ein stabiler Prozess sowie reproduzierbare Bauteilqualität gefordert. Die Verbindung der Teilschalen muss dabei mechanisch stabil und luftundurchlässig sein.

Denkbar wäre es, die Teilschalen durch Kleben bzw. Verwendung von Klebstoff zu fügen; was sich in der Praxis jedoch als schwierig, insbesondere im Hinblick auf brandtechnische Aspekte, darstellt.

Denkbar wäre auch, die Teilschalen in Hybridbauweise (Schaum und glasfaserverstärkter Kunststoff - GFK) herzustellen und/oder formschlüssig zu fügen.

Denkbar wäre auch, die Teilschalen mithilfe von Spiegelschweißen auf Kontakt (Erhitzung des Bauteils durch Kontakt mit dem Heizelement) zu verbinden. In der Praxis ergibt sich hierbei jedoch ein zu geringes Temperaturfenster, um eine 3D-Kontur (Fügefläche bzw. Fügelinie), insbesondere mit Höhenversatz, prozesssicher zu verschweißen. Eine weitere Schwierigkeit besteht hierbei in der Schwindung bzw. Schrumpfung des Partikelschaumes bei hohen Temperaturen.

Durch die Erfindung können komplexe Partikelschaum-Bauteile innerhalb kurzer Prozesszeit stoffschlüssig gefügt werden. Rückstandsloses Schweißen ist möglich, bei einem größeren Prozessfenster als demjenigen, das beim Spiegelschweißen auf Kontakt festgestellt wurde. Dadurch entsteht eine mechanisch beanspruchbare und luftdichte Fügenaht zwischen den Teilschalen ohne den Einsatz von Klebstoffen.

Generell wird durch die Verwendung von Partikelschaum neben einer Gewichtseinsparung auch eine Verkürzung der Prozesszeiten erreicht, da bisherige Prozessschritte wegfallen. Durch das kontaktlose Erhitzen, insbesondere das kontaktlose Heizelement-schweißen, können komplexe Bauteile aus mehreren Komponenten (Teilschalen) und Einlegern (auch Anbauteile, siehe unten) gefügt werden. Des Weiteren werden mit diesem Material Formgebung und Isolierung des Luftführungs-Bauteils in Einem realisiert.

Gemäß der Erfindung ergibt sich ein kontaktloses 3-D-Konturverschweißen von Partikelschaum bzw. die Verschweißung von 3D-konturierten Bauteilen in Partikelschaum-Technologie mittels kontaktlosem Heizelement-Schweißen. Luftführende Bauteile in der Luftfahrt können somit (insbesondere aus EPP, Expandiertes Polypropylen) luftdicht und stoffschlüssig gefügt werden.

Insbesondere wird der Abschnitt so weit erhitzt, dass die Teilschale bzw. der Partikelschaum dort abschmilzt, sich also eine Schmelze bildet, die dann als Verbindungsmittel zur Verbindung mit der oder den anderen Teilschalen dient.

Insbesondere ergibt sich die Verwendung des kontaktlosen Heizelementschweißens zum Fügen von 3D-kontuerierten (EPP-) Partikelschaumbauteilen für luftführende Bauteile in der Luftfahrt.

In einer bevorzugten Ausführungsform wird das Verbinden zweier Teilschalen betrachtet; dies gilt jedoch auch für drei oder mehr Teilschalen. An beiden bzw. mindestens zwei bzw. mehreren bzw. allen Teilschalen werden die zu verbindenden Abschnitte der Fügeflächen erhitzt und die erhitzten Abschnitte werden aneinander gelegt und dadurch miteinander verbunden. Insbesondere wird also an beiden Bauteilen eine entsprechende Schmelze gebildet und die beiden Schmelzen miteinander verbunden. So erfolgt eine besonders gute stoffschlüssige Verbindung. Das entsprechende Vorgehen kann auch für drei oder mehr Bauteile genutzt werden, wobei jeweils zwei oder mehr oder sämtliche zu verbindenden Fügeflächen erhitzt werden.

In einer bevorzugten Ausführungsform werden die zu verbindenden Abschnitte durch Zwischenlage eines Heizelements erhitzt. Das Heizelement wird also zwischen den zu erhitzenden Abschnitten platziert und erhitzt dann die zu verbindenden Abschnitte gleichzeitig. Insbesondere reicht hierzu ein einziges Heizelement aus, welches zum Beispiel an verschiedenen Seiten entsprechende Abschnitte erhitzt. Das Verfahren wird hierdurch vereinfacht.

Erfindungsgemäß wird der Abschnitt im Rahmen eines kontaktlosen Konturverschweißens durch ein Heizelement kontaktlos erhitzt. Die Erhitzung erfolgt dadurch, dass das Heizelement vom Abschnitt über einen Luftspalt beabstandet ist. So können insbesondere Fügeflächen bzw. Abschnitte in Form von 3D-Konturen kontaktlos erhitzt werden.

In einer bevorzugten Variante der Erfindung wird beim Erhitzen des Abschnitts ein Luftspalt zwischen Heizelement und Fügefläche benutzt, der ein konstantes Spaltmaß aufweist. Das Heizelement ist also vom zu erhitzenden Abschnitt jeweils konstant beabstandet. So kann eine gleichmäßige Erhitzung des Abschnitts erreicht werden.

Erfindungsgemäß wird als Heizelement ein passives Heizelement verwendet, das durch eine aktive Wärmequelle beheizt wird. Das passive Heizelement ist insbesondere ein Heizaufsatz. So können insbesondere verschiedene Heizelemente an verschiedene Konturen zu erhitzender Abschnitte angeglichen werden und durch Austausch der Heizelemente mit der gleichen Wärmequelle genutzt werden, um verschiedene Abschnitte zu erhitzen.

Erfindungsgemäß wird als aktive Wärmequelle ein Heiztisch verwendet, der mindestens einseitig ein Heizelement trägt. Insbesondere sind beidseitig Heizelemente angeordnet; verschiedene und insbesondere voneinander abgewandte Oberflächen dienen dann dem Erhitzen unterschiedlicher Abschnitte. Luftspalte werden dann insbesondere jeweils zum entsprechenden Abschnitt hin eingestellt.

In einer bevorzugten Ausführungsform wird mindestens eine der Teilschalen mindestens zum Erhitzen und/oder zum Verbinden auf einem Aufnahmewerkzeug gehalten. Die Teilschale wird insbesondere durch Unterdruck und/oder durch eine mechanische Haltevorrichtung auf dem Aufnahmewerkzeug gehalten. So können die Teilschalen leicht mithilfe der Aufnahmewerkzeuge gehalten und/oder relativ zueinander bewegt werden.

In einer bevorzugten Ausführungsform weist das Luftführungsbauteil mindestens ein Anbauteil auf. Bei dem Verfahren wird zusätzlich zu den Teilschalen das Anbauteil bereitgestellt. Das Anbauteil wird mit den Teilschalen verbunden, indem es beim Verbinden der Teilschalen zwischen diesen eingebettet wird. Optional kann am Verbindungsort mit der Teilschale eine Fügefläche vorgesehen sein, die dann mit dem Anbauteil verbunden wird. Insbesondere wird das Anbauteil dadurch mit mindestens zwei der Teilschalen verbunden, dass mindestens zwei der Teilschalen unter Zwischenlage des Anbauteils miteinander verbunden werden. Derartige Anbauteile werden auch als Einleger bezeichnet.

In einer bevorzugten Variante dieser Ausführungsform wird das Anbauteil mit mindestens einer der Teilschalen, insbesondere allen beteiligten Teilschalen, stoff- und/oder formschlüssig verbunden. So entsteht ein besonders guter mechanischer Halt des Anbauteils im Bauteil. Hierzu ist insbesondere im Bereich des Anbauteils eine Fügefläche vorgesehen, die dann vor der Verbindung mit dem Anbauteil erhitzt, insbesondere aufgeschmolzen, wird.

In einer bevorzugten Ausführungsform wird mindestens eine Teilschale bereitgestellt, deren Fügefläche nicht vollständig in einer Ebene verläuft. Die Fügefläche weist also Erstreckungskomponenten in allen 3 Raumrichtungen auf, ist also nicht "flächig", es handelt sich um eine "echte" 3D-Geometrie. Besonders für derartige Fügeflächen eignet sich das vorliegende Verfahren.

In einer bevorzugten Ausführungsform wird mindestens eine der Teilschalen als Partikelschaumteil bereitgestellt. Die entsprechende Teilschale ist also insbesondere aus Partikelschaum gebildet. Dabei kann die Teilschale insbesondere vollständig aus Partikelschaum bestehen. Alternativ besteht diese aus Partikelschaum als Grundmaterial, wobei noch andere Komponenten enthalten sind, z.B. Einlegestrukturen, bereits angebrachte Anbauteile etc.

In einer bevorzugten Ausführungsform wird mindestens eine der Teilschalen bereitgestellt, bei der der Partikelschaum EPP (Expandiertes Polypropylen) ist. Der entsprechende Werkstoff eignet sich besonders für das vorliegende Verfahren.

In einer bevorzugten Ausführungsform werden genau zwei Teilschalen bereitgestellt. Die Teilschalen sind dann insbesondere Halbschalen. So können Bauteile besonders einfach aus nur zwei Teilen gefertigt werden.

In einer bevorzugten Ausführungsform wird als Bauteil ein Luftauslassbauteil hergestellt. Gerade diese Bauteile weisen oft eine besonders komplexe 3D-Geometrie auf und eignen sich daher besonders zur Herstellung durch das vorliegende Verfahren. Insbesondere ist das Bauteil ein Single Aisle, Ceiling Air Outlet oder ein Single Aisle, Lateral Air Outlet.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:
- Figur 1: eine Teilschale beim Erhitzen der Fügefläche in Seitenansicht,
- Figur 2: eine Teilschale beim Erhitzen der Fügefläche in Draufsicht,
- Figuren 3 bis 13: Verfahrensschritte A bis K beim Herstellen eines Luftführung-Bauteils.

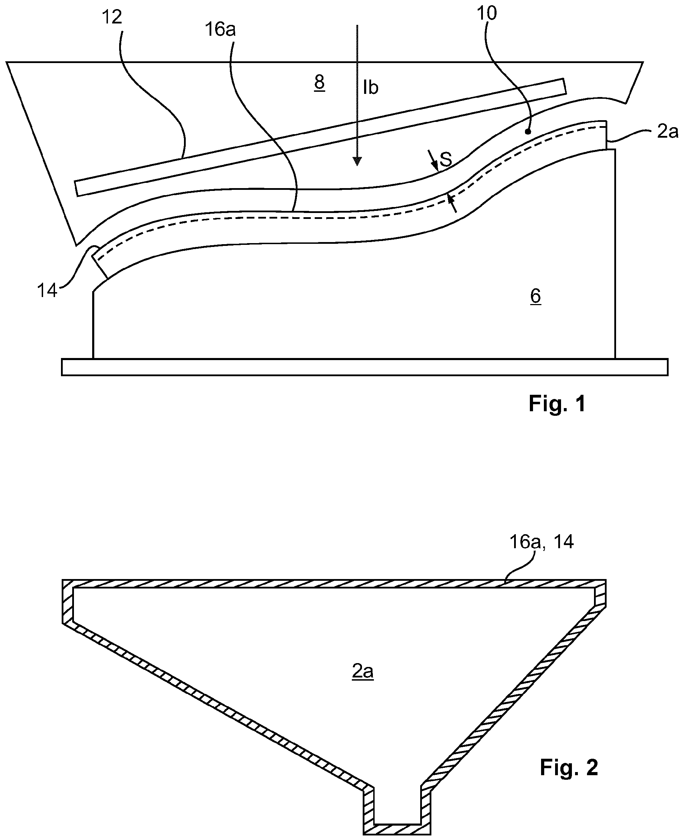

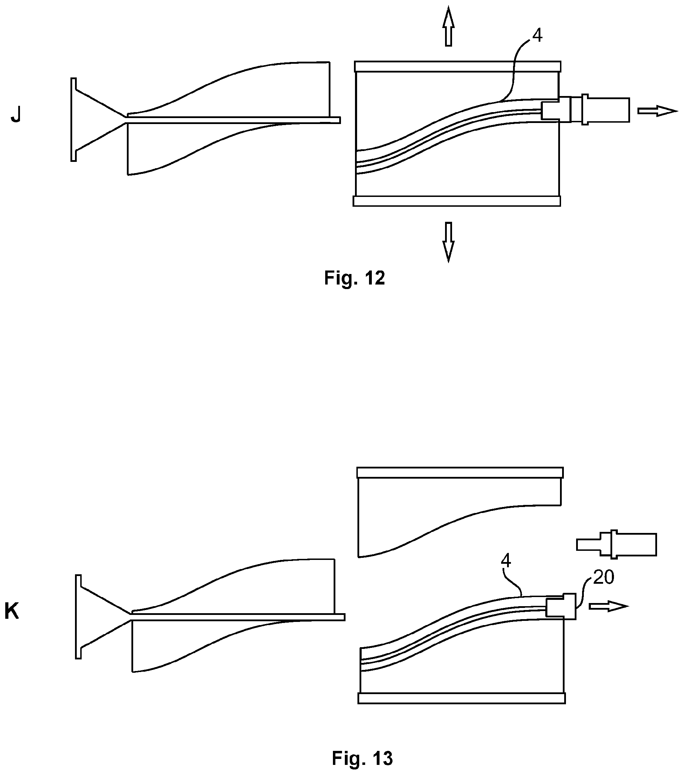

Figur 1 zeigt in Seitenansicht eine Teilschale 2a, hier eine Halbschale eines herzustellenden Luftführungs-Bauteils 4 (siehe Figuren 12,13), hier eines Luftauslass-Bauteils einer nicht näher dargestellten Klimatisierungsvorrichtung für eine Passagierkabine eines Passagierflugzeuges. Die Teilschale 2a besteht vollständig aus Partikelschaum des Materials EPP und ist auf einem Aufnahmewerkzeug 6 gehalten bzw. befestigt, hierdurch nicht näher erläuterte Unterdruck-Ansaugung von Umgebungsluft. Die Teilschale 2a weist eine echte 3D-Kontur auf, das heißt sie erstreckt sich nicht nur entlang einer Fläche, sondern in alle drei Raumrichtungen. Das Aufnahmewerkzeug 6 ist bezüglich seiner Kontur bzw. Auflagefläche an die Teilschale 2a bzw. deren 3D-Kontur angepasst, sodass die Teilschale 2a zumindest abschnittsweise am Aufnahmewerkzeug 6 aufliegt und daher sicher und fest auf diesem gehalten ist.

Auf der dem Aufnahmewerkzeug 6 gegenüberliegenden Seite der Teilschale 2a befindet sich ein Heizelement 8. Dieses ist jedoch von der Teilschale 2a durch einen Luftspalt 10 beabstandet. Hier weist der Luftspalt 10 ein konstantes Spaltmaß S, hier eine Spaltbreite auf.

Im Beispiel ist das Heizelement 8 homogen erhitzt, weist also in seinem gesamten Volumen gleiche Temperatur auf. Zur Beheizung ist eine Heizpatrone 12 in das Heizelement 8 integriert.

Beim Betrieb des Heizelements 8 strahlt dieses über den Luftspalt 10 Wärme auf die Teilschale 2a ab, sodass diese bzw. der Partikelschaum an deren Oberfläche aufschmilzt, d.h. sich eine Schicht Schmelze 14 an deren Oberfläche bildet (im Beispiel vergrößert und gestrichelt angedeutet).

Figur 2 zeigt eine Draufsicht auf die Teilschale 2a aus Figur 1 in Richtung des Pfeils Ib. Da das Heizelement 8 nur im Bereich einer schraffiert dargestellten, umlaufenden Kontur, d.h. einer Fügefläche 16a, mit dem Spaltmaß S und ansonsten mit einem deutlich größeren Spaltmaß von der Teilschale 2a beabstandet ist, erfolgt nur im Bereich der Fügefläche 16a eine ausreichende Erwärmung der Teilschale 2a, um diese aufzuschmelzen und dort Schmelze 14 zu erzeugen.

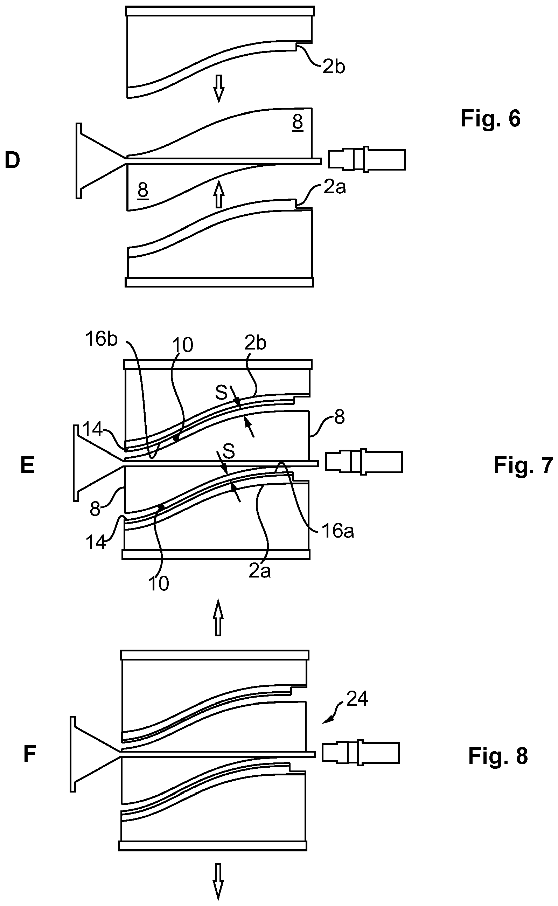

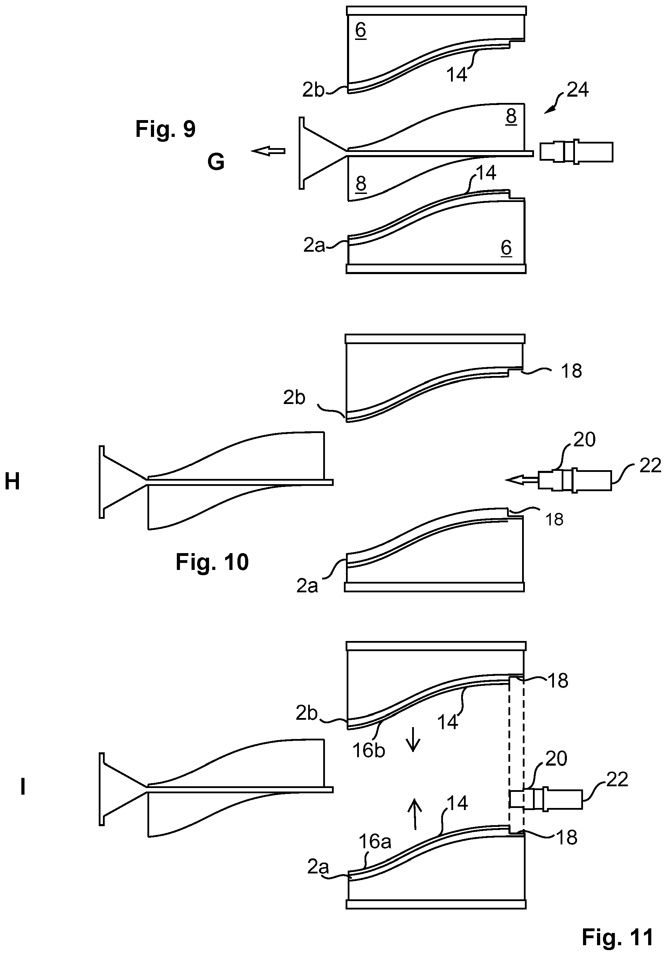

Figur 1 zeigt damit den Prozessschritt "E" (Aufheizen einer Werkzeughälfte) gemäß Figur 7. In einem nachfolgenden Schritt (siehe Figur 11 Schritt "I") kann nun die erhitzte und aufgeschmolzene Teilschale 2a im Bereich ihrer Fügefläche 16a mit einer weiteren Teilschale 2b bzw. deren Fügefläche 16b (ebenfalls aufgeschmolzen) stoffschlüssig verbunden werden.

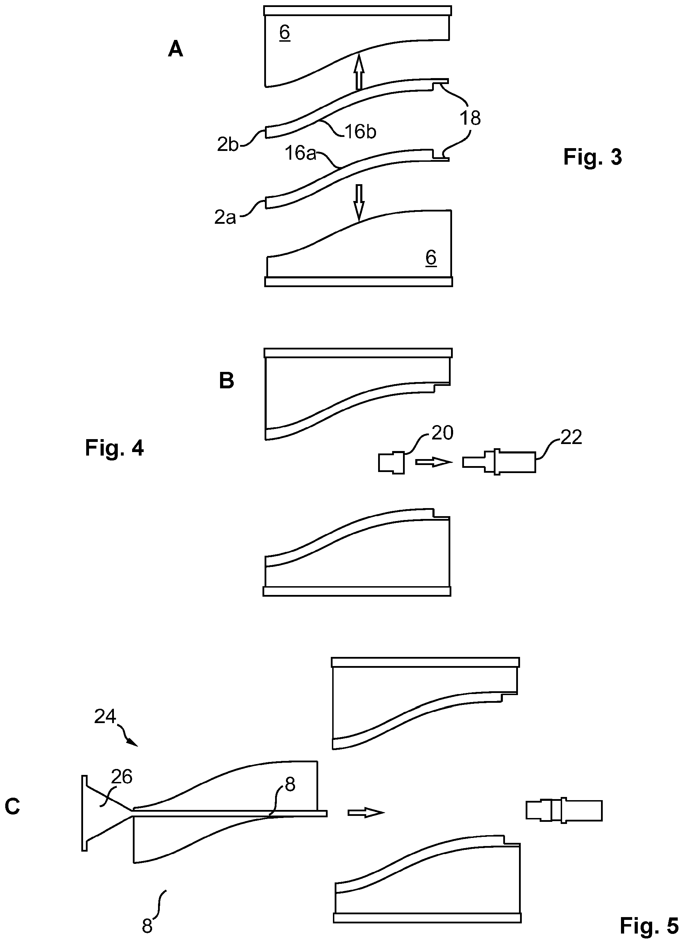

Die Figuren 3 bis 13 zeigen die Prozessschritte A-K zum Herstellen des Luftführungs-Bauteils 4 aus den Teilschalen 2a,b bzw. Halbschalen.

Im Schritt A (Figur 3) werden die Teilschalen 2a,b bereitgestellt und (durch Pfeile symbolisiert) auf jeweiligen Aufnahmewerkzeugen 6 aufgelegt und befestigt, wie sinngemäß zu Figur 1 erläutert wurde. In Abwandlung zu Figur 1 weisen die Teilschalen 2a,b in ihrem Randbereich eine nicht näher erläuterte Abflachung 18 auf, die zur späteren Aufnahme eines Anbauteils 20, hier einer Anschlussmuffe, dient.

Das Anbauteil 20 wird in Schritt B (Figur 4) bereitgestellt und (durch Pfeil symbolisiert) auf einem Halter 22 bzw. Träger befestigt.

In Schritt C (Figur 5) wird eine Heizvorrichtung 24 zwischen die Aufnahmewerkzeuge 6 bzw. die Teilschalen 2a,b eingebracht bzw. zwischengelegt (durch Pfeil symbolisiert). Die Heizvorrichtung 24 enthält eine aktive, d.h. wärmeerzeugende Wärmequelle 26 sowie zwei, auf der Wärmequelle 26 montierte Heizelemente 8. Die Wärmequelle 26 ist ein sogenannter Heiztisch, die Heizelemente 18 sind passiv ausgeführt, hier als massive Metallblöcke, und werden einzig durch die Wärmequelle 26 erwärmt.

In Schritt D (Figur 6) werden die Teilschalen 2a,b zu den Heizelementen 8 hin abgesenkt (durch Pfeile dargestellt), so dass bzw. bis gemäß Schritt E (Figur 7) zwischen je einer der Teilschalen 2a,b und dem benachbarten Heizelement 8 ein entsprechender Luftspalt 10 des Spaltmaßes S gemäß Fig. 1 verbleibt.

In Schritt E (Figur 7) werden durch Wärmestrahlung von den Heizelementen 8 über die Luftspalte 10 hinweg die Teilschalen 2a,b an deren Oberflächen im Bereich der Fügeflächen 16a,b erhitzt und dort zu Schmelze 14 aufgeschmolzen. Dies geschieht also "kontaktlos".

In Schritt F (Figur 8) werden umgekehrt zu Schritt D die entsprechend aufgeschmolzenen Teilschalen 2a,b von den Heizelementen 8 wieder abgehoben (durch Pfeile dargestellt) und in Schritt G (Figur 9) wird umgekehrt zu Schritt C die Heizvorrichtung 24 (durch Pfeil symbolisiert) wieder aus dem Bereich zwischen den Aufnahmewerkzeugen 6 bzw. den Teilschalen 2a,b entfernt.

In Schritt H (Figur 10) wird das Anbauteil 20 mithilfe des Halters 22 in Richtung des dargestellten Pfeils so weit zwischen die Teilschalen 2a,b eingebracht, dass sich dieses, wie in Schritt I (Figur 11) dargestellt, an einer Soll- bzw. Montageposition (durch gestrichelte Linien angedeutet) zwischen den Abflachung 18 befindet. In Schritt I (Figur 11) werden nun außerdem die Teilschalen 2a,b mit Hilfe der Aufnahmewerkzeuge 6 in Richtung der Pfeile aufeinander zu bewegt, bis sich die Teilschalen 2a,b an ihren Fügeflächen 16a,b berühren bzw. die entsprechenden Schmelzen 14 ineinander eindringen bzw. sich stoffschlüssig verbinden. Die Fügeflächen 16a,b werden also aneinander angelegt bzw. verbunden. Es erfolgt also ein Konturverschweißen im Bereich der Fügeflächen 16a,b. Dabei wird außerdem zwischen den Abflachungen 18 und dem Anbauteil 20 ein (hier nicht dargestellter) Formschluss gebildet, sodass das Anbauteil 20 zwischen den Teilschalen 2a,b befestigt ist. Das Anbauteil 20 wird also zwischen den Teilschalen 2a,b bei deren Verbinden eingebettet.

In Schritt I wird die dargestellte Situation dabei so lange gehalten, bis die Schmelzen 14 ausreichend abgekühlt und ausgehärtet bzw. erstarrt sind bzw. das entsprechende Material der Teilschalen 2a,b ausreichend fest geworden ist. Eine erste Alternative ist hierbei ein einfaches passives Abwarten einer passiven Selbstabkühlung der Schmelzen 14. In einer zweiten Alternative werden die Schmelzen 14 bzw. die Teilschalen 2a,b aktiv abgekühlt. Damit sind die Teilschalen 2a,b zum Bauteil 4 verbunden bzw. ist dieses hergestellt.

Gemäß Schritt J (Figur 12) werden anschließend die Aufnahmewerkzeuge 6 in Richtung der Pfeile voneinander wegbewegt, wodurch das nun fertig gestellte Bauteil 4 freigegeben wird und entsprechend Figur K (Figur 13) vom Aufnahmewerkzeug 6 entnommen wird (angedeutet durch einen Pfeil).

### Bezugszeichenliste

- 2a,b: Teilschale
- 4: Luftführung-Bauteil
- 6: Aufnahmewerkzeug
- 8: Heizelement
- 10: Luftspalt
- 12: Heizpatrone
- 14: Schmelze
- 16a,b: Fügefläche
- 18: Abflachung
- 20: Anbauteil
- 22: Halter
- 24: Heizvorrichtung
- 26: Wärmequelle
- S: Spaltmaß
- A-K: Prozess Schritt

## Patentansprüche

1. Verfahren zum Herstellen eines Luftführungs-Bauteils (4) für eine Klimatisierungsvorrichtung eines Flugzeuges, bei dem:
- mindestens zwei Teilschalen (2a,b) des Bauteils (4) bereitgestellt werden, wobei mindestens eine der Teilschalen (2a,b) eine Fügefläche (16a,b) aufweist, an der sie mit einer anderen der Teilschalen (2a,b) zu verbinden ist, und die Teilschalen (2a,b) zumindest an den Fügeflächen (16a,b) Partikelschaum enthalten,
- mindestens ein Abschnitt einer der Fügeflächen (16a,b) kontaktlos erhitzt wird,
- die Teilschalen (2a,b) an den erhitzten Fügeflächen (16a,b) aneinander gelegt und dadurch miteinander zum Bauteil (4) verbunden werden,
**dadurch gekennzeichnet, dass**
der Abschnitt im Rahmen eines kontaktlosen Konturverschweißens durch ein über einen Luftspalt (10) beabstandetes Heizelement (8) kontaktlos erhitzt wird,
als Heizelement (8) ein passives Heizelement (8) verwendet wird, das durch eine aktive Wärmequelle (26) beheizt wird,
als aktive Wärmequelle (26) ein Heiztisch verwendet wird, der mindestens einseitig ein Heizelement (8) trägt.

2. Verfahren nach Anspruch 1,
**dadurch gekennzeichnet, dass**
für das Verbinden zweier Teilschalen (2a,b) an beiden Teilschalen (2a,b) die zu verbindenden Abschnitte der Fügeflächen (16a,b) erhitzt werden und die erhitzten Abschnitte aneinander gelegt und dadurch miteinander verbunden werden.

3. Verfahren nach einem der vorhergehenden Ansprüche,
**dadurch gekennzeichnet, dass**
die zu verbindenden Abschnitte durch Zwischenlage des Heizelements (8) erhitzt werden.

4. Verfahren nach einem der vorhergehenden Ansprüche,
**dadurch gekennzeichnet, dass**
beim Erhitzen des Abschnitts ein Luftspalt (10) zwischen Heizelement (8) und Fügefläche benutzt wird, der ein konstantes Spaltmaß (S) aufweist.

5. Verfahren nach einem der vorhergehenden Ansprüche,
**dadurch gekennzeichnet, dass**
mindestens eine der Teilschalen (2a,b) mindestens zum Erhitzen und/oder zum Verbinden auf einem Aufnahmewerkzeug (6) gehalten wird.

6. Verfahren nach einem der vorhergehenden Ansprüche,
**dadurch gekennzeichnet, dass**
das Luftführungs-Bauteil (4) mindestens ein Anbauteil (20) aufweist, wobei
- zusätzlich zu den Teilschalen (2a,b) das Anbauteil (20) bereitgestellt wird,
- das Anbauteil (20) mit den Teilschalen (2a,b) verbunden wird, indem es beim Verbinden der Teilschalen (2a,b) zwischen diesen eingebettet wird,

7. Verfahren nach Anspruch6,
**dadurch gekennzeichnet, dass**
das Anbauteil (20) mit mindestens einer der Teilschalen (2a,b) stoff- und/oder formschlüssig verbunden wird.

8. Verfahren nach einem der vorhergehenden Ansprüche,
**dadurch gekennzeichnet, dass**
mindestens eine Teilschale (2a,b) bereitgestellt wird, deren Fügefläche (16a,b) nicht vollständig in einer Ebene verläuft.

9. Verfahren nach einem der vorhergehenden Ansprüche,
**dadurch gekennzeichnet, dass**
mindestens eine der Teilschalen (2a,b) als Partikelschaumteil bereitgestellt wird.

10. Verfahren nach einem der vorhergehenden Ansprüche,
**dadurch gekennzeichnet, dass**
mindestens eine der Teilschalen (2a,b) bereitgestellt wird, bei der der Partikelschaum EPP ist.

11. Verfahren nach einem der vorhergehenden Ansprüche, **dadurch gekennzeichnet, dass**
genau zwei Teilschalen (2a,b) bereitgestellt werden.

12. Verfahren nach einem der vorhergehenden Ansprüche, **dadurch gekennzeichnet, dass**
als Bauteil (4) ein Luftauslassbauteil hergestellt wird.

## Claims

1. Method for producing an air-guiding component (4) for an air-conditioning system of an aircraft, in which:
- at least two part-shells (2a,b) of the component (4) are provided, wherein at least one of the part-shells (2a,b) has a joining face (16a,b) at which it is to be connected to another of the part-shells (2a,b), and the part-shells (2a,b) contain particle foam at least at the joining faces (16a,b),
- at least one portion of one of the joining faces (16a,b) is contactlessly heated,
- the part-shells (2a,b) are placed against one another at the heated joining faces (16a,b) and thereby connected to one another to form the component (4),
**characterized in that**
the portion is contactlessly heated as part of a contactless contour welding operation by means of a heating element (8) spaced apart via an air gap (10),
the heating element (8) used is a passive heating element (8) which is heated by an active heat source (26),
the active heat source (26) used is a heating table which bears a heating element (8) at least on one side.

2. Method according to Claim 1,
**characterized in that,**
for the connection of two part-shells (2a,b), the portions of the joining faces (16a,b) that are to be connected are heated on both part-shells (2a,b) and the heated portions are placed against one another and thereby connected to one another.

3. Method according to either of the preceding claims, **characterized in that**
the portions to be connected are heated by interposition of the heating element (8).

4. Method according to one of the preceding claims, **characterized in that,**
when heating the portion, an air gap (10) between the heating element (8) and joining face is used that has a constant gap size (S).

5. Method according to one of the preceding claims, **characterized in that,**
at least for heating and/or for connecting, at least one of the part-shells (2a,b) is held on a receiving tool (6).

6. Method according to one of the preceding claims, **characterized in that**
the air-guiding component (4) has at least one attachment part (20), wherein
- the attachment part (20) is provided in addition to the part-shells (2a,b),
- the attachment part (20) is connected to the part-shells (2a,b) **in that**, when connecting the part-shells (2a,b), it is embedded between them.

7. Method according to Claim 6,
**characterized in that**
the attachment part (20) is connected to at least one of the part-shells (2a,b) in an integrally bonded and/or form-fitting manner.

8. Method according to one of the preceding claims, **characterized in that**
at least one part shell (2a,b) is provided whose joining face (16a,b) does not extend completely in one plane.

9. Method according to one of the preceding claims, **characterized in that**
at least one of the part-shells (2a,b) is provided as a particle foam part.

10. Method according to one of the preceding claims, **characterized in that**
at least one of the part-shells (2a,b) is provided in which the particle foam is EPP.

11. Method according to one of the preceding claims, **characterized in that**
precisely two part-shells (2a,b) are provided.

12. Method according to one of the preceding claims, **characterized in that**
the component (4) produced is an air-outlet component.

## Revendications

1. Procédé de fabrication d'un composant de guidage d'air (4) destiné à un dispositif de conditionnement d'air d'un aéronef, procédé dans lequel :
- il est prévu au moins deux parties de coque (2a,b) du composant (4), au moins une des parties de coque (2a,b) comportant une surface d'assemblage (16a,b) au niveau de laquelle elle doit être reliée à une autre des parties de coque (2a,b), et les parties de coque (2a,b) contenant de la mousse de particules au moins au niveau de surfaces d'assemblage (16a,b),
- au moins une portion d'une des surfaces d'assemblage (16a,b) est chauffée sans contact,
- les parties de coque (2a,b) sont placées l'une contre l'autre au niveau des surfaces d'assemblage (16a,b) chauffées et sont ainsi reliées l'une à l'autre pour former le composant (4),
**caractérisé en ce que**
la portion est chauffée sans contact par un élément chauffant (8) espacé par un espace d'air (10) dans le cadre d'un soudage de contour sans contact,
un élément chauffant passif (8) qui est chauffé par une source de chaleur active (26) est utilisé comme élément chauffant (8),
une table chauffante qui porte un élément chauffant (8) sur au moins un côté est utilisée comme source de chaleur active (26).

2. Procédé selon la revendication 1,
**caractérisé en ce que**
pour relier deux parties de coque (2a,b) les portions à relier des surfaces d'assemblage (16a,b) sont chauffées au niveau des deux parties de coque (2a,b) et les portions chauffées sont placées l'une contre l'autre et sont ainsi reliées l'une à l'autre.

3. Procédé selon l'une des revendications précédentes,
**caractérisé en ce que**
les portions à relier sont chauffées par interposition de l'élément chauffant (8).

4. Procédé selon l'une des revendications précédentes,
**caractérisé en ce que**
un espace d'air (10), ménagé entre l'élément chauffant (8) et la surface d'assemblage et ayant une dimension d'espace constante (S), est utilisé lors du chauffage de la portion.

5. Procédé selon l'une des revendications précédentes,
**caractérisé en ce que**
au moins une des parties de coque (2a,b) est maintenue sur un outil de réception (6) au moins pour effectuer le chauffage et/ou pour la liaison.

6. Procédé selon l'une des revendications précédentes,
**caractérisé en ce que**
le composant de guidage d'air (4) comporte au moins une pièce rapportée (20),
- la pièce rapportée (20) étant prévue en plus des parties de coque (2a,b),
- la pièce rapportée (20) étant reliée aux parties de coque (2a,b) en s'encastrant entre celles-ci lorsque les parties de coque (2a,b) sont reliées.

7. Procédé selon la revendication 6,
**caractérisé en ce que**
la pièce rapportée (20) est reliée à l'une au moins des parties de coque (2a,b) par une liaison de matière et/ou une liaison par complémentarité de formes.

8. Procédé selon l'une des revendications précédentes,
**caractérisé en ce que**
au moins une partie de coque (2a,b) est prévue dont la surface d'assemblage (16a,b) ne s'étend pas entièrement dans un plan.

9. Procédé selon l'une des revendications précédentes,
**caractérisé en ce que**
l'une au moins des parties de coque (2a,b) est prévue comme pièce en mousse de particules.

10. Procédé selon l'une des revendications précédentes,
**caractérisé en ce que**
l'une au moins des parties de coque (2a,b) est prévue dans laquelle la mousse de particules est de l'EPP.

11. Procédé selon l'une des revendications précédentes,
**caractérisé en ce que**
il est prévu exactement deux parties de coque (2a,b).

12. Procédé selon l'une des revendications précédentes,
**caractérisé en ce que**
le composant (4) fabriqué est un composant de sortie d'air.
